# EUROPEAN PATENT APPLICATION

(11) **EP 4 257 541 A1**
(43) Date of publication of application: **11.10.2023**
(21) Application number: 21919607.8
(22) Date of filing: 07.12.2021
(51) Int. Cl.: C01B 3/04, F27D 17/00

(54) **AMMONIA DECOMPOSITION APPARATUS**

(30) Priority: 14.01.2021 JP 2021004363
(71) Applicant: Mitsubishi Heavy Industries, Ltd., Tokyo 100-8332 (JP)
(72) Inventor: SAKAGUCHI, Masakazu, Yokohama-shi, Kanagawa 220-8401 (JP); TACHIBANA, Shinya, Yokohama-shi, Kanagawa 220-8401 (JP)
(74) Representative: Studio Torta S.p.A.
(86) International application number: PCT/JP2021/044811
(87) International publication number: WO 2022/153718

(57) **Abstract**

An ammonia decomposition system includes: a reactor filled with a catalyst for a decomposition reaction where ammonia which is a raw material is decomposed into hydrogen and nitrogen; and a diluent gas supply line for supplying a diluent gas having a lower ammonia concentration than the raw material, such that the diluent gas is mixed with the raw material before the raw material flows into the catalyst. The reactor has an inner surface covered with a refractory material, and the catalyst is filled on a side opposite to the inner surface across the refractory material. The diluent gas supply line is provided with a temperature raising device for raising a temperature of the diluent gas.

## Description

### TECHNICAL FIELD

The present disclosure relates to an ammonia decomposition system.

This application claims the priority of Japanese Patent Application No. 2021-004363 filed on January 14, 2021, the content of which is incorporated herein by reference.

### BACKGROUND

Patent Document 1 describes an ammonia decomposition system for decomposing ammonia into hydrogen and nitrogen by externally heating a catalyst layer while allowing ammonia to pass through.

### Citation List

### Patent Literature

Patent Document 1: JP2019-167265A

### SUMMARY

### Technical Problem

However, under an environment with a high concentration of ammonia, such as when a raw material of 100% ammonia is used, ammonia and an iron-based material react and the iron-based material is nitrated at 500°C to 600°C which is a temperature where ammonia is decomposed, decreasing a mechanical strength. Then, for example, if a tube filled with a catalyst is made of the iron-based material, the mechanical strength of the tube is decreased, which may lead to breakage of the tube.

In view of the above, an object of at least one embodiment of the present disclosure is to provide an ammonia decomposition system capable of suppressing nitridation of a material for a reactor where ammonia is decomposed.

### Solution to Problem

In order to achieve the above object, an ammonia decomposition system according to the present disclosure, includes: a reactor filled with a catalyst for a decomposition reaction where ammonia which is a raw material is decomposed into hydrogen and nitrogen; and a diluent gas supply line for supplying a diluent gas having a lower ammonia concentration than the raw material, such that the diluent gas is mixed with the raw material before the raw material flows into the catalyst. The reactor has an inner surface covered with a refractory material, and the catalyst is filled on a side opposite to the inner surface across the refractory material. The diluent gas supply line is provided with a temperature raising device for raising a temperature of the diluent gas.

### Advantageous Effects

With an ammonia decomposition system of the present disclosure, since an ammonia concentration in a reactor is decreased by a diluent gas and the refractory material suppresses heat transfer to an outer wall of the reactor, it is possible to suppress nitridation of a material constituting the reactor where ammonia is decomposed.

### BRIEF DESCRIPTION OF DRAWINGS

FIG. 1 is a configuration diagram of an ammonia decomposition system according to Embodiment 1 of the present disclosure.
FIG. 2 is a configuration diagram of the ammonia decomposition system according to Embodiment 2 of the present disclosure.

### DETAILED DESCRIPTION

Hereinafter, an ammonia decomposition system according to embodiments of the present disclosure will be described with reference to the drawings. The embodiments each indicate one aspect of the present disclosure, do not intend to limit the disclosure, and can optionally be modified within a scope of a technical idea of the present disclosure.

### (Embodiment 1)

### <Configuration of ammonia decomposition system according to Embodiment 1 of present disclosure>

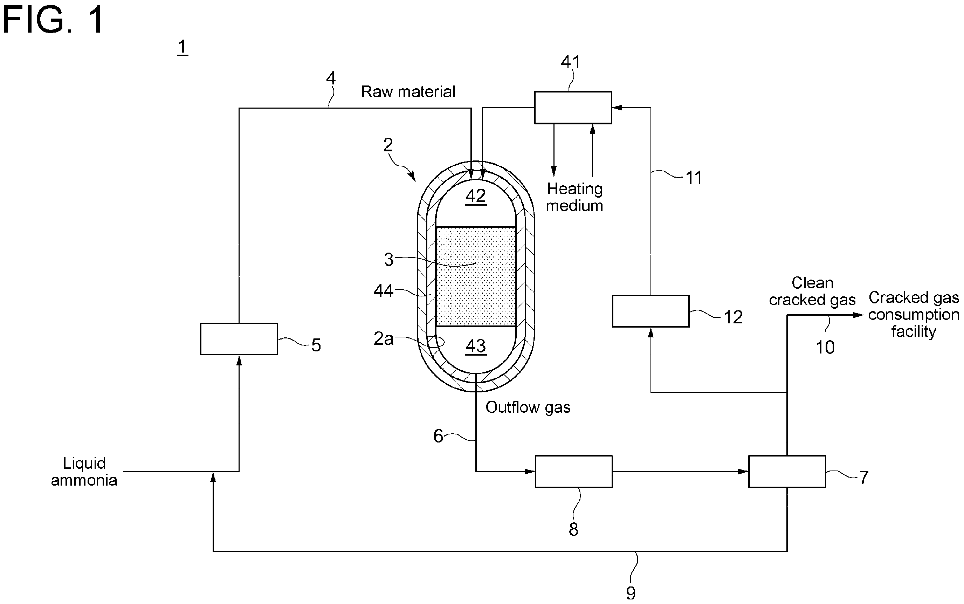

As shown in FIG. 1, an ammonia decomposition system 1 according to Embodiment 1 of the present disclosure is an apparatus for decomposing ammonia, which is a raw material, into hydrogen and nitrogen by a reaction represented by the following reaction formula (1). The ammonia decomposition system 1 includes a reactor 2 filled with a catalyst 3 for the ammonia decomposition reaction represented by the reaction formula (1).

2NH₃→N₂+3H₂ ... (1)

The reactor 2 is connected to a raw material supply line 4 for supplying the raw material to the reactor. The raw material supply line 4 is provided with an evaporator 5 for evaporating liquid ammonia supplied from a storage facility (not shown) for storing liquid ammonia into gaseous ammonia. Further, the reactor 2 is connected to one end of an outflow gas line 6 through which an outflow gas having flowed out from the reactor 2 flows. The outflow gas contains nitrogen, hydrogen, and unreacted ammonia according to the reaction formula (1).

Another end of the outflow gas line 6 is connected to an ammonia recovery device 7. The configuration of the ammonia recovery device 7 is not particularly limited, and may be, for example, a water scrubber, a pressure swing adsorption (PSA) device, or the like. The outflow gas line 6 is provided with a cooler 8 for cooling the outflow gas, upstream of the ammonia recovery device 7. The cooler 8 may be, for example, a heat exchanger for exchanging heat between the outflow gas and liquid ammonia before flowing into the evaporator 5. With this configuration, the outflow gas is cooled and the temperature of the liquid ammonia is raised, making it possible to reduce energy for raising the temperature of the liquid ammonia in the evaporator 5.

A recovered ammonia line 9 is provided in order to return the liquid ammonia recovered in the ammonia recovery device 7 to the raw material supply line 4 upstream of the evaporator 5. The ammonia recovery device 7 is connected to one end of a clean cracked gas line 10 for supplying a clean cracked gas produced by removing ammonia from the outflow gas in the ammonia recovery device 7 to a cracked gas consumption facility such as a hydrogen station. An outflow gas recycle line 11 is provided which is connected at one end to the clean cracked gas line 10 and is connected at another end to the reactor 2. The outflow gas recycle line 11 is provided with a compressor 12, and a heater 41 which is a temperature raising device for raising the temperature of the outflow gas flowing through the outflow gas recycle line 11. The heater 41 may be, for example, a heat exchanger for exchanging heat between the outflow gas and a heating medium such as steam, or may be configured to externally and directly heat the tube, where the outflow gas recycle line 11 passes, with a combustion flame or heat of a combustion gas.

The reactor 2 has an inner surface 2a covered with a refractory material 44. The catalyst 3 is filled on a side opposite to the inner surface 2a across the refractory material 44. As the refractory material 44, a brick, a refractory brick, refractory cement, or the like can be used. Inside the reactor 2, an upstream space 42 and a downstream space 43 are formed on an upstream side and a downstream side of the catalyst 3, respectively. The raw material supply line 4 and the outflow gas recycle line 11 of the reactor 2 are connected to the reactor 2 so as to communicate with the upstream space 42, and the outflow gas line 6 is connected to the reactor 2 so as to communicate with the downstream space 43.

### <Operation of ammonia decomposition system according to Embodiment 1 of present disclosure>

Next, an operation of the ammonia decomposition system 1 according to Embodiment 1 of present disclosure will be described with reference to FIG. 1. The liquid ammonia flowing through the raw material supply line 4 is evaporated in the evaporator 5 to be ammonia gas, and flows into the upstream space 42 of the reactor 2. As will be described later, part of the outflow gas containing hydrogen, nitrogen, and ammonia also flows into the upstream space 42 via the outflow gas recycle line 11. The ammonia gas and the outflow gas are mixed in the upstream space 42 to be a mixed gas. The outflow gas flows into the upstream space 42 while being heated in the heater 41 when flowing through the outflow gas recycle line 11. It is no longer necessary to provide the reactor 2 with a device for heating the catalyst 3, by adjusting heating of the outflow gas in the heater 41 such that the temperature of the mixed gas in the upstream space 42 reaches a temperature at which the activity of the catalyst 3 is sufficient. The heating of the outflow gas in the heater 41 is preferably adjusted such that the temperature of a crude cracked gas having flowed out to the downstream space 43 through the catalyst 3 is 300°C to 700°C, preferably 400°C to 600°C.

When the mixed gas passes through the catalyst 3, at least part of ammonia in the mixed gas is decomposed into hydrogen and nitrogen by the ammonia decomposition reaction represented by the reaction formula (1), which is caused by a catalytic action of the catalyst 3, and flows out from the catalyst 3 to the downstream space 43 as the crude cracked gas. The crude cracked gas flows out from the downstream space 43 as the outflow gas and flows through the outflow gas line 6.

The outflow gas flowing through the outflow gas line 6 flows into the ammonia recovery device 7, after being cooled in the cooler 8. In the ammonia recovery device 7, ammonia is recovered from the outflow gas, the clean cracked gas containing hydrogen, nitrogen, traces of unrecovered ammonia, and a small amount of water if the ammonia recovery device 7 is a water scrubber is supplied to the cracked gas consumption facility via the clean cracked gas line 10, and the recovered ammonia is supplied to the raw material supply line 4 upstream of the evaporator 5 via the recovered ammonia line 9. Part of the clean cracked gas flows into the outflow gas recycle line 11.

The outflow gas having flowed into the outflow gas recycle line 11 is pressurized by the compressor 12, heated in the heater 41 as described above, and flows into the upstream space 42 of the reactor 2. As described above, the ammonia gas and the outflow gas are mixed in the upstream space 42, and if the ammonia gas is 100% ammonia, since the outflow gas contains hydrogen and nitrogen in addition to ammonia, the ammonia concentration of the latter is lower than the ammonia concentration of the former, resulting in the ammonia concentration in the mixed gas of the ammonia gas and the outflow gas being lower than the ammonia concentration of the ammonia gas supplied as the raw material. That is, the outflow gas flowing into the upstream space 42 via the outflow gas recycle line 11 functions as a diluent gas for diluting the ammonia gas flowing into the upstream space 42.

In general, the higher the ammonia concentration and the higher the temperature, the more easily a nitridation reaction by ammonia occurs, and in the ammonia decomposition system 1 according to Embodiment 1 of the present disclosure, since the ammonia concentration in the reactor 2 is decreased by the outflow gas supplied via the outflow gas recycle line 11, the heat transfer to an outer wall of the reactor 2 is suppressed by the refractory material 44, and an outer wall temperature of the reactor 2 can be kept sufficiently lower than the temperatures of the upstream space 42, the catalyst 3, and the downstream space 43, it is possible to suppress nitridation of the material constituting the reactor 2. Moreover, since the catalyst 3 is heated with the heat of the outflow gas raised in temperature by the heater 41, it is possible to render a device for heating the catalyst 3 unnecessary. Further, since it is not necessary to heat the catalyst 3 with the heating medium, a flow path through which the heating medium flows is not needed in the reactor 2. For this reason, the catalyst 3 can be filled in the reactor 2 without using a catalyst containing part for containing the catalyst 3, increasing the catalyst filling amount compared to a case where the catalyst 3 is filled in the reactor 2 by using the catalyst containing part. Thus, it is possible to reduce the size of the reactor 2.

### <Modified example of ammonia decomposition system according to Embodiment 1 of present disclosure>

In Embodiment 1, the clean cracked gas having flowed out from the ammonia recovery device 7 is used as the diluent gas. However, the present disclosure is not limited to this form. The outflow gas before flowing into the ammonia recovery device 7 may be used as the diluent gas. The clean cracked gas is also a gas obtained by recovering ammonia from the outflow gas, and thus can be said to be the outflow gas having flowed out from the reactor 2. Further, in Embodiment 1, the liquid ammonia with 100% concentration stored in a storage facility (not shown) is evaporated into gaseous ammonia in the evaporator 5. However, the present disclosure is not limited to supplying the liquid ammonia with 100% concentration to the evaporator 5, but a principal component mixed with a small amount of a mixture may supply a liquid containing ammonia to the evaporator 5.

### (Embodiment 2)

Next, the ammonia decomposition system according to Embodiment 2 will be described. The ammonia decomposition system according to Embodiment 2 is obtained by modifying Embodiment 1 in terms of the configuration of the temperature raising device. In Embodiment 2, the same constituent elements as those in Embodiment 1 are associated with the same reference signs and not described again in detail.

### <Configuration of ammonia decomposition system according to Embodiment 2 of present disclosure>

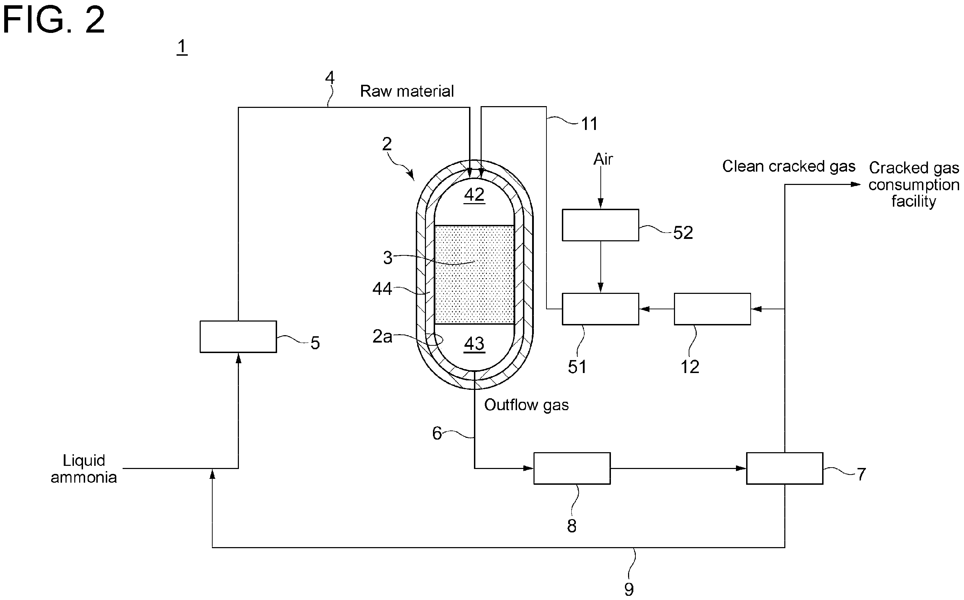

As shown in FIG. 2, the ammonia decomposition system 1 according to Embodiment 2 of the present disclosure includes, on the outflow gas recycle line 11, a combustor 51 for burning the outflow gas flowing through the outflow gas recycle line 11, as the temperature raising device for raising the temperature of the outflow gas flowing through the outflow gas recycle line 11. A compressor 52 for supplying air to the combustor 51 communicates with the combustor 51. Other configurations are the same as those in Embodiment 1.

### <Operation of ammonia decomposition system according to Embodiment 2 of present disclosure>

Next, an operation of the ammonia decomposition system 1 according to Embodiment 2 of present disclosure will be described. The operation of Embodiment 2 is the same as the operation of Embodiment 1 except that in the combustor 51, the air supplied from the compressor 52 burns hydrogen and ammonia in the outflow gas flowing through the outflow gas recycle line 11 to raise the temperature of the outflow gas. As with Embodiment 1, the temperature rising of the outflow gas in the combustor 51 is also preferably adjusted such that the temperature of the crude cracked gas is 300°C to 700°C, preferably 400°C to 600°C.

As described above, since the operation of Embodiment 2 and the operation of Embodiment 1 are basically the same, the above-described technical effects obtained in Embodiment 1 can also be obtained in Embodiment 2.

### <Modified example of ammonia decomposition system according to Embodiment 2 of present disclosure>

In Embodiment 2, the combustor 51 is configured to burn the outflow gas. However, the present disclosure is not limited to this form. A configuration may be adopted where instead of the combustor 51, an ammonia combustor is provided which is configured to extract part of the liquid ammonia flowing through the raw material supply line 4 and burn the extracted ammonia and a combustion gas from the ammonia combustor is supplied to the outflow gas recycle line 11. With this configuration as well, the heat of the combustion gas can raise the temperature of the outflow gas flowing through the outflow gas recycle line 11.

### <Modified example of ammonia decomposition systems according to Embodiments 1 and 2 of present disclosure>

In Embodiments 1 and 2, a configuration is preferable where the outflow gas recycle line 11 is not connected to the raw material supply line 4 but is connected to the reactor 2. This is because in Embodiments 1 and 2, since the temperature of the outflow gas flowing through the outflow gas recycle line 11 is raised, if the outflow gas raised in temperature is supplied to the raw material supply line 4, the heat of the outflow gas raises the temperature of the ammonia gas before the ammonia gas is sufficiently mixed with the outflow gas in the raw material supply line 4, which may nitride the material constituting the raw material supply line 4.

In Embodiments 1 and 2, the diluent gas is the outflow gas (the crude cracked gas or the clean cracked gas) having flowed out from the reactor 2. However, the diluent gas is not limited to the outflow gas. A diluent gas different from the outflow gas may be prepared separately, and a diluent gas supply line may be provided through which a supply source of the diluent gas communicates with the reactor 2 or the raw material supply line 4. If the outflow gas is used as the diluent gas, the outflow gas recycle line 11 constitutes the diluent gas supply line.

Nitrogen gas and hydrogen gas can be used as the diluent gas other than the outflow gas, and hydrogen gas from a hydrogen pipeline may be used as the hydrogen gas. In addition, it is possible to use a gas which contains hydrogen produced in another hydrogen production process, such as (1) gas which contains hydrogen obtained by steam reforming methane or methanol, (2) coal gasification gas, (3) blast furnace gas, (4) coke oven gas, (5) gas obtained by increasing hydrogen through a water gas shift reaction with respect to the gases of the above (1) to (4), (6) gas obtained by removing carbon dioxide from the gas of the above (5), (7) gas obtained by removing moisture from the gas of the above (6), (8) gas which contains hydrogen obtained by catalytic reforming of naphtha, (9) gas which contains hydrogen obtained by electrolysis of water, or (10) gas which contains hydrogen obtained by a thermal decomposition reaction of methane. In further addition, it is possible to use gas which contains hydrogen obtained in an external ammonia decomposition process, such as gas which contains hydrogen obtained from an external plant for performing thermal decomposition on ammonia or gas which contains hydrogen obtained from an external plant for decomposing ammonia by an autothermal method.

In the ammonia decomposition reaction in Embodiments 1 and 2, since only hydrogen and nitrogen are produced, no carbon dioxide is emitted. Further, in Embodiment 1, no carbon dioxide is emitted when the heating medium such as steam or the combustion gas supplied to the heater 41 is produced, or if fossil fuel is not used as fuel for a heating furnace. Furthermore, since ammonia and hydrogen are burned in the combustor 51 of Embodiment 2, no carbon dioxide is emitted. As described above, as long as the outflow gas is used as the diluent gas without using fossil fuel in Embodiment 1, the raw material of the ammonia decomposition system 1 is completed with only ammonia and no carbon dioxide is emitted, and thus the ammonia decomposition system 1 is a preferred form as a carbon-free process.

The contents described in the above embodiments would be understood as follows, for instance.
[1] An ammonia decomposition system according to one aspect, includes: a reactor (2) filled with a catalyst (3) for a decomposition reaction where ammonia which is a raw material is decomposed into hydrogen and nitrogen; and a diluent gas supply line (11) for supplying a diluent gas having a lower ammonia concentration than the raw material, such that the diluent gas is mixed with the raw material before the raw material flows into the catalyst (3). The reactor (2) has an inner surface (2a) covered with a refractory material (44), and the catalyst (3) is filled on a side opposite to the inner surface (2a) across the refractory material (44). The diluent gas supply line (11) is provided with a temperature raising device (heater 41/combustor 51) for raising a temperature of the diluent gas.

With the ammonia decomposition system of the present disclosure, since the ammonia concentration in the reactor is decreased by the diluent gas and the refractory material suppresses heat transfer to the outer wall of the reactor, it is possible to suppress nitridation of the material constituting the reactor where ammonia is decomposed. Moreover, since the catalyst is heated with heat of the diluent gas raised in temperature by the temperature raising device, it is possible to render a device for heating the catalyst unnecessary. Further, since it is not necessary to heat the catalyst with the heating medium, a flow path through which the heating medium flows is not needed in the reactor. Therefore, the catalyst can be filled in the reactor without using a catalyst containing part for containing the catalyst, increasing the catalyst filling amount compared to a case where the catalyst is filled in the reactor by using the catalyst containing part. Thus, it is possible to reduce the size of the reactor.

[2] An ammonia decomposition system according to another aspect is the ammonia decomposition system of [1], wherein the diluent gas is part of an outflow gas having flowed out from the reactor (2).

With such configuration, an operating cost of the ammonia decomposition system can be reduced compared to the case where the diluent gas is prepared separately.

[3] An ammonia decomposition system according to still another aspect is the ammonia decomposition system of [1] or [2], wherein the temperature raising device is a heating furnace (heater 41).

With such configuration, it is possible to obtain the same technical effect as the technical effect obtained from the above configuration [1].

[4] An ammonia decomposition system according to still another aspect is the ammonia decomposition system of [1] or [2], wherein the temperature raising device is a heat exchanger (heater 41).

With such configuration, it is possible to obtain the same technical effect as the technical effect obtained from the above configuration [1].

[5] An ammonia decomposition system according to still another aspect is the ammonia decomposition system of [1] or [2], wherein the temperature raising device is a combustor (51) for burning the diluent gas.

With such configuration, it is possible to obtain the same technical effect as the technical effect obtained from the above configuration [1].

[6] An ammonia decomposition system according to still another aspect is the ammonia decomposition system of [1] or [2], wherein the temperature raising device is an ammonia combustor for burning part of the raw material, and the ammonia decomposition system (1) is configured such that a combustion gas from the ammonia combustor is supplied to the diluent gas supply line (11).

With such configuration, it is possible to obtain the same technical effect as the technical effect obtained from the above configuration [1].

[7] An ammonia decomposition system according to still another aspect is the ammonia decomposition system of [1] to [6], wherein the diluent gas supply line (11) has a downstream end connected to the reactor (2).

In a case where the diluent gas is raised in temperature while flowing through the diluent gas supply line, if the diluent gas is supplied to the raw material supply line, the heat causes ammonia and the material of the raw material supply line to react, which may nitride the material of the raw material supply line. By contrast, with the above configuration [7], since ammonia and the diluent gas flow separately into the reactor, it is possible to reduce the risk of nitridation the material of the raw material supply line.

### Reference Signs List

- 1: Ammonia decomposition system
- 2: Reactor
- 2a: Inner surface (of reactor)
- 2b: Connection portion
- 3: Catalyst
- 4: Raw material supply line
- 6: Outflow gas line
- 11: Outflow gas recycle line (diluent gas supply line)
- 26: Catalyst containing part
- 26a: Containing tube (catalyst containing part)
- 26c: Another end (communication portion) (of containing tube)
- 41: Heater (temperature raising device)
- 44: Refractory material
- 51: Combustor (temperature raising device)

## Claims

1. An ammonia decomposition system, comprising:
a reactor filled with a catalyst for a decomposition reaction where ammonia which is a raw material is decomposed into hydrogen and nitrogen; and
a diluent gas supply line for supplying a diluent gas having a lower ammonia concentration than the raw material, such that the diluent gas is mixed with the raw material before the raw material flows into the catalyst,
wherein the reactor has an inner surface covered with a refractory material, and the catalyst is filled on a side opposite to the inner surface across the refractory material, and
wherein the diluent gas supply line is provided with a temperature raising device for raising a temperature of the diluent gas.

2. The ammonia decomposition system according to claim 1,
wherein the diluent gas is part of an outflow gas having flowed out from the reactor.

3. The ammonia decomposition system according to claim 1or 2,
wherein the temperature raising device is a heating furnace.

4. The ammonia decomposition system according to claim 1or 2,
wherein the temperature raising device is a heat exchanger.

5. The ammonia decomposition system according to claim 1or 2,
wherein the temperature raising device is a combustor for burning the diluent gas.

6. The ammonia decomposition system according to claim 1or 2,
wherein the temperature raising device is an ammonia combustor for burning part of the raw material, and the ammonia decomposition system is configured such that a combustion gas from the ammonia combustor is supplied to the diluent gas supply line.

7. The ammonia decomposition system according to any one of claims 1 to 6,
wherein the diluent gas supply line has a downstream end connected to the reactor.
